Europäisches Patentamt

European Patent Office

Office européen des brevets

(19)

(11) Publication number: **0 199 679**

**A1**

(12) **EUROPEAN PATENT APPLICATION**

(21) Application number: **86830077.3**

(22) Date of filing: **27.03.86**

(51) Int. Cl.⁴: **A 01 G 31/02**
**B 65 D 81/26**

(30) Priority: **04.04.85 IT 2132985 U**

(43) Date of publication of application:
**29.10.86 Bulletin 86/44**

(84) Designated Contracting States:
**AT BE CH DE FR GB LI LU NL SE**

(71) Applicant: **AZIANDA AGRICOLA DI BRUNA
COMPAGNIN**
**Via Pietro Micca, 36**
**I-35100 Padova(IT)**

(72) Inventor: **Compagnin, Bruna**
**AZIENDA AGRICOLA ALFASALAD Via Pietro Micca, 36**
**I-35100 Padova(IT)**

(74) Representative: **Cicogna, Franco**
**Ufficio Internazionale Brevetti Dott.Prof. Franco Cicogna**
**Via Visconti di Modrone, 14/A**
**I-20122 Milano(IT)**

(54) A container with perforated walls for hydroponic cultivation.

(57) A container for hydroponic cultivation comprises an upwardly open box like body (1) having the overall shape of an inverted rectangular truncated pyramid with a small cone angle, the body having perforated side walls (2) and a substantially flat bottom wall (7), the latter having a continuous perimetral flange (3) defining, with the bottom wall (7) of the body (1) a tray-like structure, there being at least one upstanding ridge (4) in the bottom wall (7) with a corresponding cavity on the underface thereof, with an opening (6) therein allowing communication between the underface of the bottom wall (7) of the body and the interior space of the tray like structure.

Fig. 1

EP 0 199 679 A1

- 1 -

"A Container with Perforated Walls for Hydroponic
Cultivation                                                    "

The present invention relates to a container having
perforated walls suitable for hydroponic cultivation and
in particular the cultivation of salad vegetables.

Hydroponic cultivation (also called hydroculture)
represents an interesting alternative to the usual
methods of cultivation in a cultivation medium.  This
type of culture, moreover, has the advantage of almost
completely eliminating the problems of irrigation and
the necessity for handling the cultivation medium which
arises with conventional cultivation.

The present invention seeks to provide a container which
is particularly adapted for hydroponic cultivation of
salad vegetables.

According to the present invention, there is provided a
container for hydroponic cultivation comprising an
upwardly open box-like body, characterised by the fact
that the body has a substantially rectangular plan form
with the overall shape of the container being an
inverted rectangular truncated pyramid with a small cone
angle, defined by perforated side walls and a bottom
wall, the latter having a continuous perimetral flange
defining, with the bottom wall of the body, a tray-like
structure, there being at least one upstanding area of

- 2 -

the said bottom wall having an opening therein, allowing communication from the under face of the bottom wall to the interior of the container.

A particular advantage of the present invention is that it provides a container for hydroponic cultivation which can also serve as packaging for any product which may be produced therein. Another advantage of the present invention is that embodiments thereof can be formed which are structurally simple and which can easily be stacked in a manner such as not to create excessive encumbrance during storage.

One embodiment of the present invention will now be more particularly described by way of example, with reference to the accompanying drawings, in which:

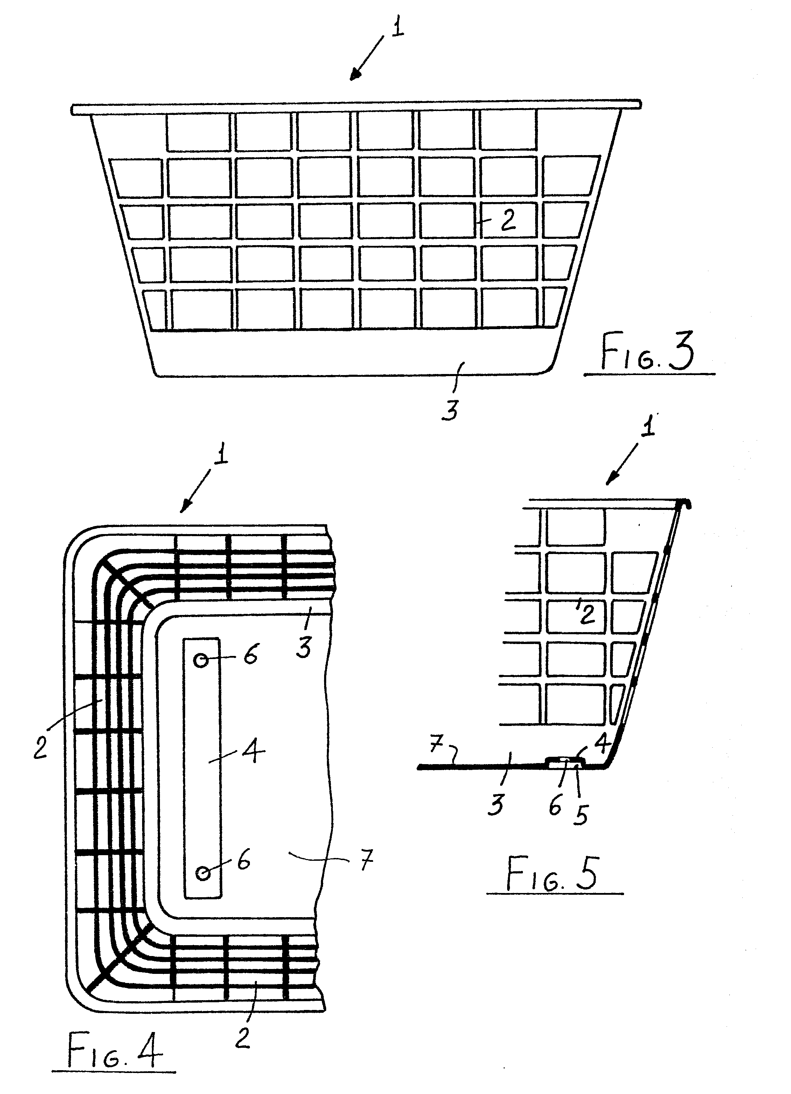

Figure 1 is a perspective view of a container formed as an embodiment of the invention;

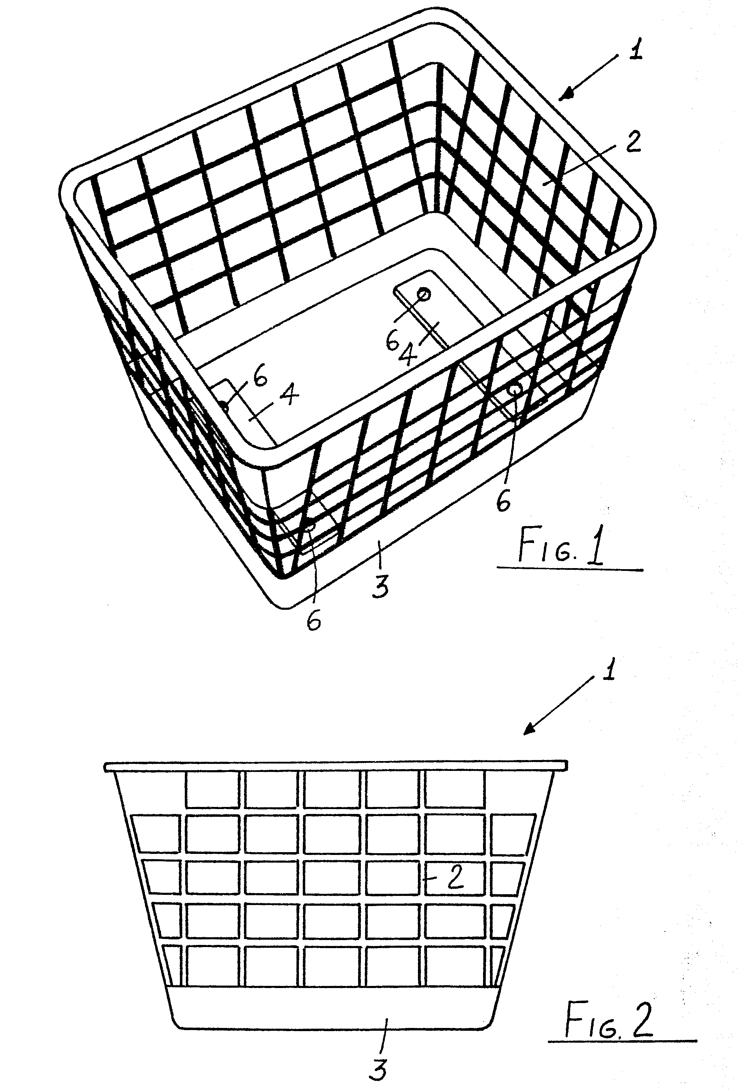

Figure 2 is an end view of the container, shown in Figure 1;
Figure 3 is a side view of the container illustrated in Figure 1;
Figure 4 is a partial plan view of the container illustrated in Figure 1; and
Figure 5 is a partial vertical longitudinal section of the embodiment illustrated in Figure 1.

With reference now to the drawings, the container illustrated, which is adapted for hydroponic cultivation in general, and for the hydroponic cultivation of salad vegetables in particular, is constituted by an upwardly open box-like body, generally indicated with the reference numeral 1, and is preferably made of a

- 3 -

suitable plastics material. This box-like body 1 has the shape of an inverted truncated rectangular pyramid with a small cone angle and has side walls with a plurality of rectangular openings in a reticulated array in the form of a rectangular mesh.

The base of this box-like body 1 is surrounded by a perimetral flange 3 of suitable height and has upwardly projecting transverse ridges 4 in the upper face forming corresponding cavities 5 in the under side beneath the base itself. These upwardly projecting transverse ridges 4 are provided with at least one pair of through holes 6 which put the region below the lower surface of the base of the container 1 into communication with the interior of the container itself. The presence of the said transverse ridges 4, in practice, allows a correct watering of the base or bottom of the container 1 on which the seeds are arranged for their cultivation in an aqueous solution of nutrient salts.

In fact, the difference in height between the upper surface of the said upwardly projecting ridges 4 and the top of the perimetral flange 3 surrounding the bottom of the container 1 ensures that a shallow layer of nutrient solution is trapped on the bottom of the container 1 to encourage sprouting of the seeds without disturbing the subsequent growth of the plants. This growth, obviously, is aided by the presence of the perforations in the walls 2 which allow an adequate exposure of the plants themselves to the light, and which further permit a continuous exchange of air. The container thus realised can also advantageously serve as packaging for the retail sale of plants grown in it.

- 4 -

Claims:

1.  A container for hydroponic cultivation comprising an upwardly open box-like body (1) characterised by the fact that the body (1) has a substantially rectangular plan form with the overall shape of the container being an inverted rectangular truncated pyramid with a small cone angle, defined by perforated side walls (2) and a bottom wall (7) the latter having a continuous perimetral flange (3) defining, with the bottom wall (7) of the body (1) a tray-like structure, there being at least one upstanding area (4) of the said bottom wall (7) having an opening (6) therein allowing communication on the under face of the bottom wall (7) to the interior of the container (1).

2.  A container for hydroponic cultivation according to Claim 1 characterised by the fact that the said perforated side walls (2) have a plurality of rows and columns of rectangular openings in the form of a mesh network.

3.  A container for hydroponic cultivation according to Claim 1 or Claim 2 characterised in that there are a plurality of upstanding areas (4) in the bottom wall (7) of the box-like body (1), each in the form of a transverse ridge having a correspondingly shaped cavity (5) in the under face of the bottom wall (7) of the container.

- 5 -

4. A container for hydroponic cultivation according to any preceding Claim, characterised by the fact that it is adapted to serve as packaging for the retail sale of the plants grown therein.

FIG. 3

FIG. 4

FIG. 5

F₁G. 1

F₁G. 2

0199679

European Patent Office

**EUROPEAN SEARCH REPORT**

Application number

EP 86 83 0077

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 249 606 (TRESCH) <br> * Figure 1; claims 1-3 * | 1-4 | A 01 G 31/02 <br> B 65 D 81/26 |
| X | BE-A- 876 872 (WOPLA-PLASTICS) <br> * Claims 1,7; figures 1,2; page 4, lines 4-7 * | 1-4 | |
| X | FR-A-2 546 032 (VANNIER S.A.) <br> * Page 4, line 15 - page 5, line 4; figure 1; claim 2 * | 1,3 | |
| X,P | FR-A-2 553 970 (ALLIBERT SA) <br> * Figure 1; claims 1-3; page 1, lines 32-38 * | 1-4 | |
| A | US-A-4 249 341 (HUEGLI) <br> * Figures 1-3; column 2, lines 30-32 * | 3,4 | TECHNICAL FIELDS SEARCHED (Int. Cl.4) |
| | ----- | | A 01 G |

The present search report has been drawn up for all claims

| Place of search | Date of completion of the search | Examiner |
|---|---|---|
| THE HAGUE | 03-07-1986 | MEINDERS H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82